# EUROPEAN PATENT APPLICATION

(11) **EP 1 035 591 A1**
(43) Date of publication of application: **13.09.2000**
(21) Application number: 99204280.4
(22) Date of filing: 13.12.1999
(51) Int. Cl.: H01L 31/042, E04D 13/18, F24J 2/52

(54) **Cover system for arranging on a surface one or more solar elements such as solar panels and/or solar thermal collectors**

(30) Priority: 05.03.1999 NL 1011458
(71) Applicant: Coöperatief Advies en Onderzoeksburo u.a. Ecofys, 3526 KL Utrecht (NL)
(72) Inventor: Gelders, Raymondus Hubertus Joseph Maria, 1017 EW Amsterdam (NL); Billings, Colman, Killiney, County Dublin (IE); Böttger, Willem Otto Julius, 1052 WK Amsterdam (NL); Lepelaar, Mark, 2518 HB Den Haag (NL)
(74) Representative: Duxbury, Stephen

(57) **Abstract**

Cover system for arrangement on a surface for example a building, said system for providing cover and supporting elements such as solar panels, solar thermal collectors and roofing tiles, the system comprising:
- a first side suitable as an inner wall or ceiling surface of the building;
- a second side, opposite the first side, said second side having such a form as to be suitable for supporting the further roofing elements thereon, wherein one or more of the systems is/are directly attachable to a building in order to form the roof thereof.

## Description

The present invention relates to a cover system for arrangement on a building, said system for supporting roofing elements such as solar panels and roofing tiles, to an assembly comprising such a system and one or more solar panels, to a prefabricated roof comprising one or more such assemblies and to a method for providing a roof or a roof and solar panels and/or solar thermal collectors onto a building.

Roofs incorporating photovoltaic panels, i.e. solar panels, are becoming evermore popular as a means for providing energy.

A problem associated with such roofs incorporating solar panels, is that these solar panels are often such an integral part of the roof, that the absence thereof enables precipitation to leak through the roof, i.e. the roofs without the solar panels are not watertight, this especially being the case with sloping roofs. This necessitates that such solar panels have to be incorporated into the roofs at an early stage of building construction in order to ensure watertightness. This has however made such valuable solar panels very susceptible to theft since they are relatively easily removed from the roofs of unfinished buildings in unguarded building sites.

An object of the present invention is to substantially overcome one or more of these problems.

According to a first aspect, the present invention provides a cover system for arrangement on a building, said system for providing cover and supporting elements such as solar panels and roofing tiles, the system comprising:
- a first side suitable as an inner wall or ceiling surface of the building;
- a second side, opposite the first side, said second side having such a form as to be suitable for supporting the further roofing elements thereon, wherein one or more of the systems is/are directly attachable to a building in order to form the roof thereof.

A system is therefore provided, which is preferably prefabricated and after transportation to a building site can be very easily and efficiently arranged as a roof on a building, whereafter solar panels can be mounted on the system in the last phase of the building process which reduces said solar panels' susceptibility to theft as well as diminishing the insurance costs. This enables separate liability, for the building plus roof system and the solar panels/solar thermal collectors, which is economically attractive to all parties concerned, since the expensive and relatively fragile solar elements can now be delivered separately, since the roof system already mounted provides a water-proof building.

Bearing members are preferably associated with the second side of the system, which bearing members are preferably arranged thereon at a prefabrication site, for an optimum load bearing of the further roof elements.

An electrical connection unit is preferably arranged in association with the system, most preferably between the first and second sides thereof. In this way use can be made of a plug system, whereby complicated electric work is no longer required to be carried out on the roof by electricians, thereby reducing costs and installation time.

Clamping means may be associated with the bearing members for clamping solar panels to the bearing members, wherein said clamping means are preferably releasable and/or displaceable in order to effect a good attachment of the solar panels to the system, whereby different size solar panels may be catered for.

A water resistent layer is preferably arranged over the bearing members and the second side of the system in order to ensure a waterproof roof system.

A vapor tight layer can be arranged in the roof system, preferably between the first and second sides thereof, in order to provide protection against possible vapor condensation problems.

Support profiles for solar panels may be arranged on the bearing elements, in which support profiles the solar panel clamps are preferably arrangeable. In this manner, a good system flexibility is provided in order to cater for different types and sizes of solar panels, whereby the system is aesthetically pleasing.

The support profiles may be fastened to the bearing members, which preferably take the form of a series of spaced apart battens, by means of one or more fastening members, which are screwed fast to the battens, or may be joined to the battens by means of one or more clip elements, which clip elements have such a form as to releasably clip onto the battens. In the latter situation, piercing of the water resistent layer to effect a good attachment of the solar panels to the roof system is not necessary. The battens are preferably arranged spaced apart in line next to one another, whereby support battens for the solar panels are greater in height than possible support battens for roofing tiles. Accordingly, any precipitation falling onto the roof can easily run thereof, running underneath the solar panels and over the waterproof layer of the system, between the solar panel support battens and running over the roofing tiles. Since the roof system is arrangeable on a building so that the battens form channels wherethrough precipitation can run off the roof, instead of barriers, a very effective channeling away of precipitation falling onto the roof is provided.

According to a second aspect of the present invention, there is provided an assembly according to claim 17.

According to another aspect of the present invention there is provided a building according to claim 19.

According to a further aspect of the present invention there is provided a method for providing a roof on a building incorporating solar panels comprising the steps of prefabricating a system as described above, transporting said system to a building from the prefabrication site, for which building one or more of the prefabricated systems is suitable as a roof, arranging the one or more systems on the building to provide the building with a roof, and subsequently attaching one or more solar panels and/or roofing tiles to the system prearranged on the roof.

Such a method enables a building to be very quickly and easily provided with an effective roof upon which solar panels can be arranged simply by clamping and plugging thereto, instead of having to be installed very accurately by experienced specialists.

According to a further aspect of the invention there is provided a support profile set according to any of the claims 24-30 for supporting elements such as solar panels and solar thermal collectors.

The invention will now be further clarified and described by way of the following description which refers to the figures and tables, wherein:
- figure 1 shows a perspective view of a part of the system according to the present invention;
- figure 2 shows a partially cut away perspective view of the attachment of a solar panel to the system shown in figure 1;
- figure 3 shows a side view of the system as shown in figures 1 and 2, viewed along projection III from figure 5;
- figure 4 shows a perspective partially cut away view of the cable attachment according to the present invention;
- figure 5 shows a perspective, partially cut away view of a part of a roof incorporating an assembly according to the present invention;
- figure 6 shows a perspective view of a second roof according to the present invention;
- figure 7 shows a partially cut away side view of projection VII from figure 5 showing a top tile subassembly after the system plus solar panel has been arranged as a roof.
- figure 8 shows a partially cut away side view of projections VIII from figure 5 exhibiting the bottom tile subassembly of a roof according to the present invention.
- figure 9 shows a partially cut away side view of the projection IX from figure 6, illustrating the top ridge subassembly of a roof according to the present invention.

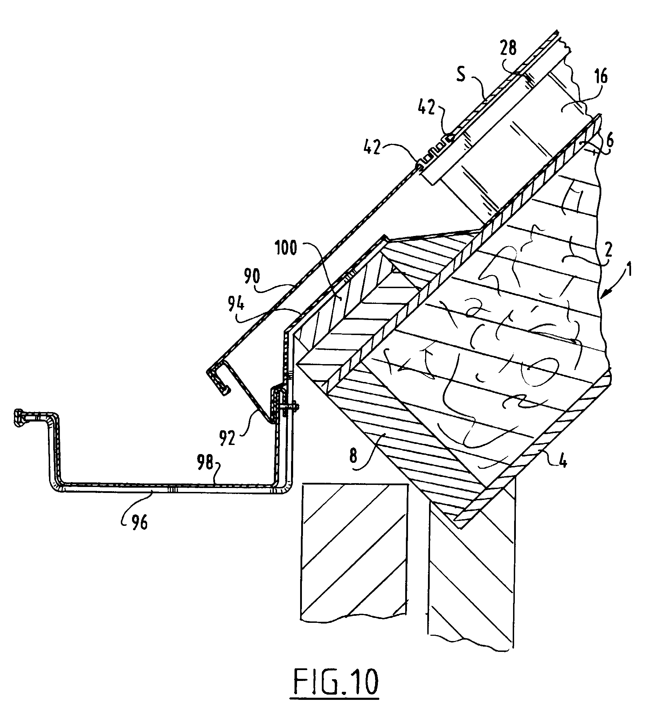

- figure 10 shows a partially cut away side view of a bottom gutter subassembly of a roof according to the present invention as seen along production X from figure 6.
- figure 11 shows a partially cut away side view of a further preferred embodiment of the system according to the present invention for securing solar panels.
- figure 12 shows a variation on figure 2.

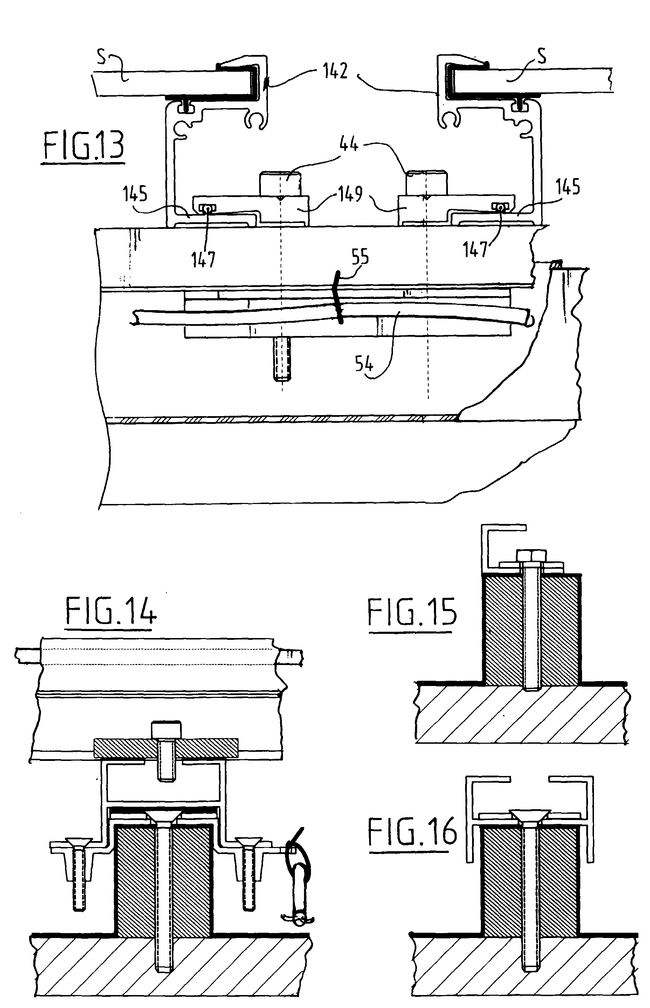

- figure 13 shows a side view of the clamping system shown in figure 12.
- figures 14, 15 and 16 show end views of alternative clamping systems.

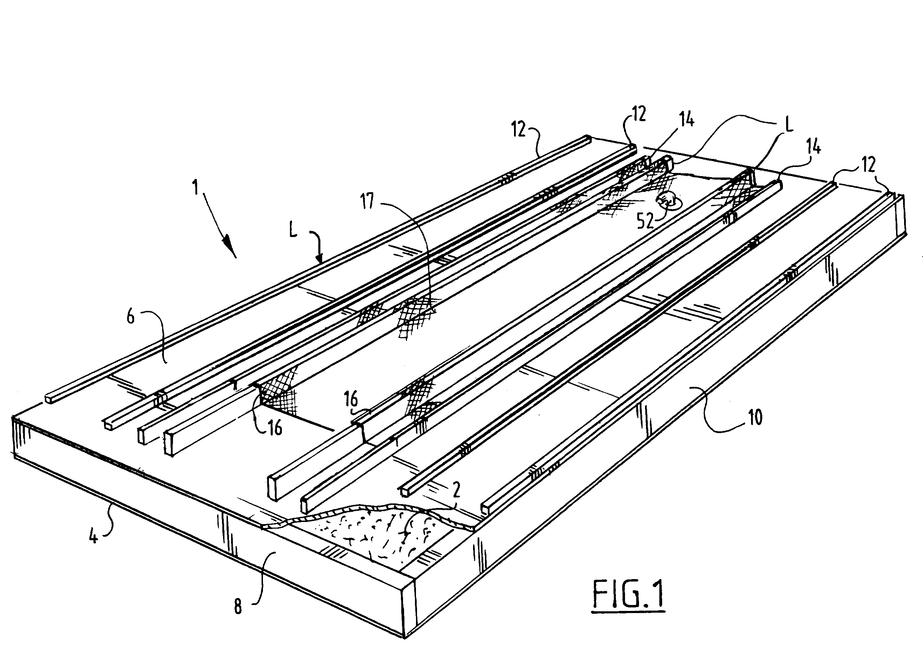

A system 1 (figure 1) according to the present invention comprises an expanded polystyrene core 2, sandwiched between a lower first side 4 and an upper second side 6, which sides 4, 6 are formed by board layers.

Wooden end and side beams 8 and 10 respectively, of which only two are shown, are also mounted at the periphery of the expanded polystyrene core 2 between the lower and upper sides 4 and 6 respectively in order to add rigidity to the system 1.

A layer of aluminium foil (not shown) is arranged between the expanded polystyrene core 2 and the lower side 4 of the system in order to provide a vapor tight layer.

A series of wooden laths L are arranged lengthwise on the upper side 6 of the system, which laths L can be attached thereto by any suitable means including gluing and nailing.

The laths L are divided up into edge laths 12 having roughly the same width as height, intermediate laths 14 and raised central laths 16, the intermediate laths 14 having a height roughly in between that of the standard side laths 12 and the raised central laths 16.

A layer of EPDM (ethylene-propylene diene monomer or ethylene propylene diëenter polymer) 17 is arranged on the system 1 over the laths L.

It will be apparent that the distance between the respective laths depends on the size of solar panels to be mounted thereon and the spacing between the roof systems when arranged on a building.

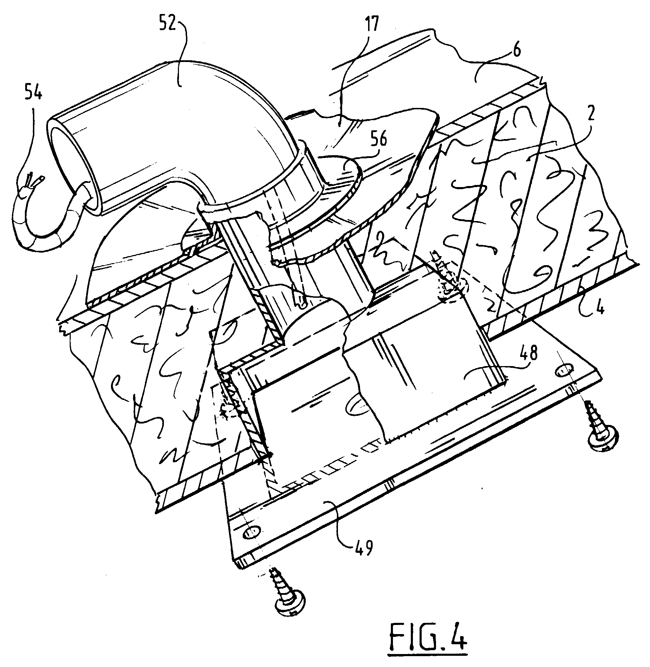

On the lower side 4 of the system 1 a hole for an electrical coupling box 48 is drilled through the lower side 4, the aluminium foil and into the expanded polystyrene 4. The electrical connection box is then glued into said hole whereby a cover 49 is screwed tight over the electric connection box after arrangement thereof, so that the roof system remains vapor tight (see also figure 4).

The system 1 is provided with a cable pipe 52 wherethrough one or more electrical cables 54 extend from the electric connection box 48 to the solar panels and/or the interior of the building.

The upper side 6 and watertight EPDM layer 17 of the system are pierced in order to allow passage of the cables 54.

The cable pipe 52 is provided with an EPDM cuff 56 which is glued to the EPDM layer 17. The cable pipe 52 is bent downwards to prevent water entering. The cable 54 exiting the pipe 52 can be held in place loops 55 arranged on bearing members 18 (see later).

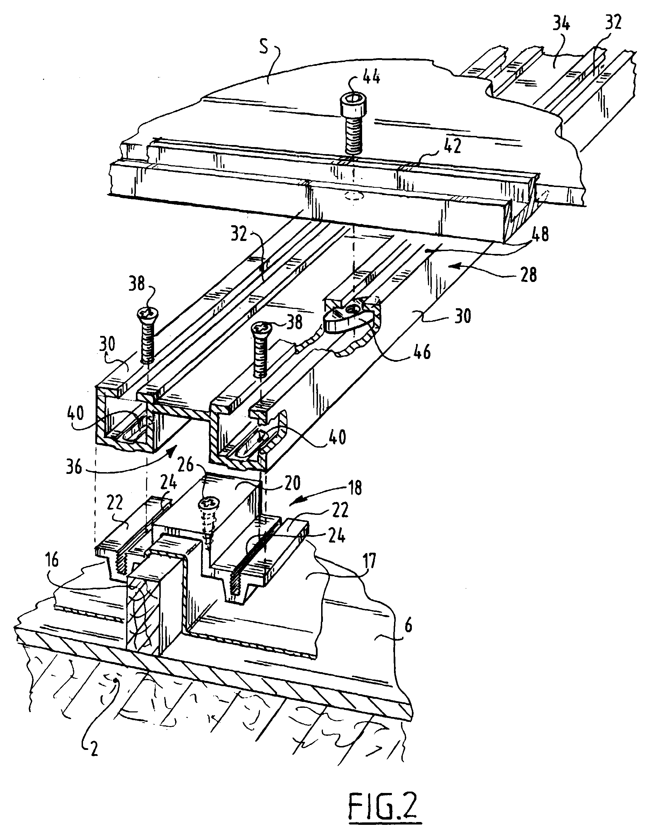

A 1.15 ml thick EPDM foil layer 17 (figure 2) which provides a watertight underlayer, is arranged over the upper side 6 and laths L. The EPDM foil is glued thereto with acrylate glue to follow the profile of the upper side 6 and the laths L.

Two bearing members 18 are arranged near the extremities of the central laths 16 over the waterproof foil layer 17 (see figure 2).

Each bearing member 18 consists of a central inverted U shaped profile 20 which corresponds with the outer profile of the laths 16, and arranged on either side thereof, two V shaped wing sections 22 each incorporating a serrated edge channel 24 running therethrough. The inverted U profile 20 of the bearing member 18 is fastened to the lath 16 by means of a screw 26 passing therethrough, piercing the foil layer 16 to be screwed into the lath 16 and the upper side 6.

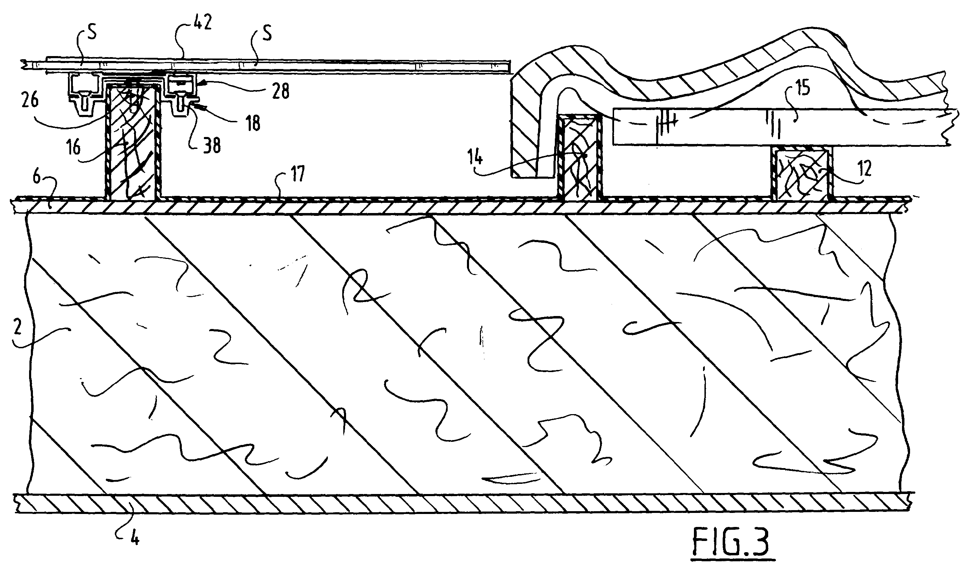

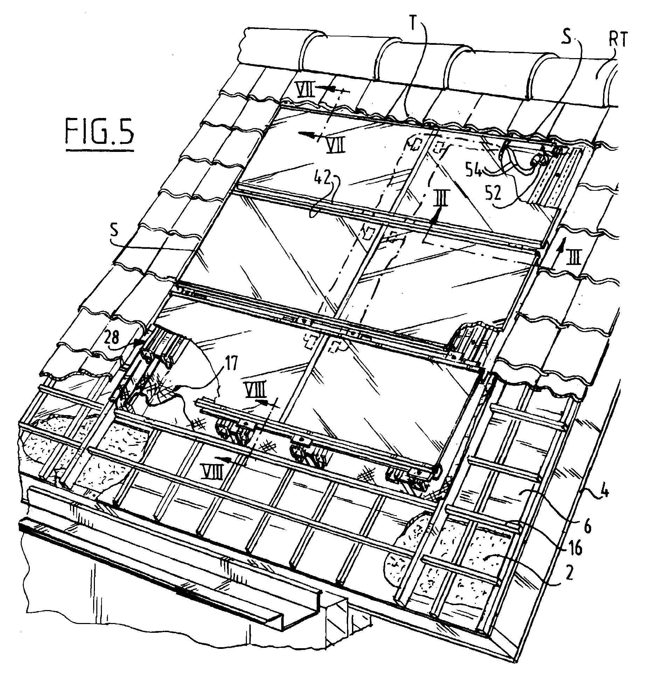

The bearing members 18 bear solar panel support profiles 28 which extend along and over the central laths 16 (see also figure 3 and 5).

The solar panel support profiles 28 each consist of two square in cross section hollow side sections 30 provided with a channel 32 running longitudinally therethrough.

The side sections 30 are joined just below the inner upper edges thereof by a flat central section 34 which together with the side sections 30 forms an inverted female U profile 36 which slots over the inverted U shaped male and female profile 20 of the bearing coupling member 18 and the laths 16 (see also figure 5). When assembled, the bearing members 18 are screwed to the laths 16 and into the upper side 6, whereafter the solar panel support profiles 28 are slotted over the bearing members 18 and the laths 16, whereafter the solar panel support 28 is fastened to the system 1 by means of screws 38 which are screwed through longitudinally screw slits 40 arranged in the underside of said side sections 30 of the solar supports 28 at the extremities thereof and into the serrated edged channel 24 of the V shaped profiles 22 of the bearing members 18. The slits 40 allow for expansion and continuation of the solar panel supports 28, dependent on ambient temperature.

A solar panel S is releasably, adjustably secured to the system 1 in the following way.

A holding clamp 42 is arranged to extend along an edge of the solar panel S. In a not shown embodiment, a plurality of individual clamps can be arranged along the side of the solar panels S.

The clamp 42 is secured to the side sections 30 of the solar panel supports by means of screws 44 which are screwed through a hole in the clamp 42 into a releasable oval shaped nut 46 so that when arranged longitudinal, this may be inserted and removed from the solar panel support profile channels 32 but when arranged sideways, the oval nut catches under lips 48 of the channels 32 so that the solar panels S are secured thereto when the screws 44 are screwed into the wing nuts 46.

The clamp 42, solar panel support profiles 28 and bearing members 18 form elements of a support profile set for supporting, in this case, the solar panel S on the system 1.

In the embodiment shown, the inverted U shaped profile 20 of the bearing members 18 has a length of 80 mm, whilst the laths 16 are between 35 and 75 mm in height.

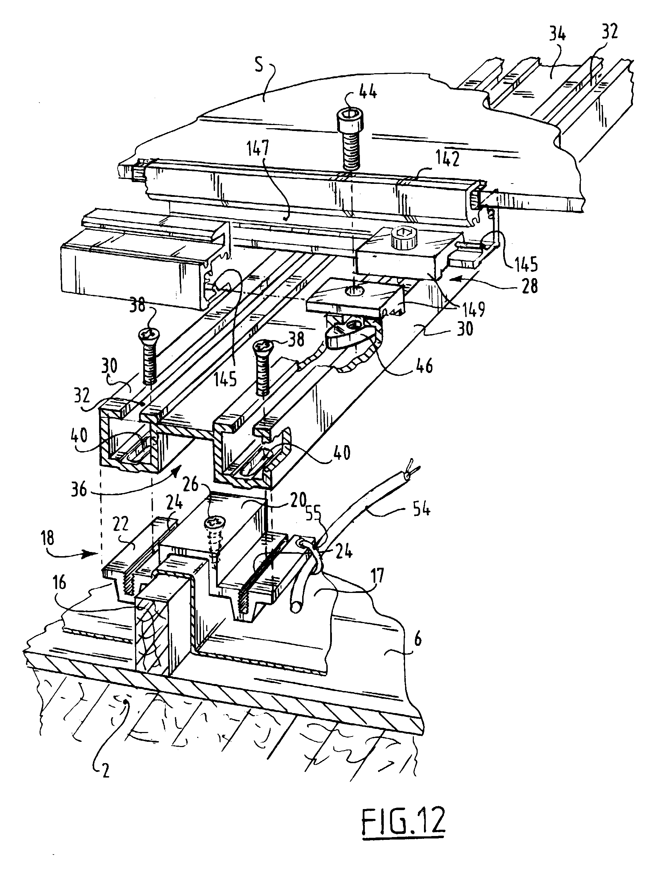

Figure 12 shows an alternative clamp arrangement, wherein a clamp 142 arranged along an edge of the solar panel S, has a laminated inner profile in contact with the solar panel S, thereby, just as the clamp 42, ensuring that water running off the solar panels cannot collect in the clamp 42, 142 between these and the solar panels S. The clamps 142 have a lower inverted gripping profile 145, having a raised section 147 extending there across, which raised section 147 is coupleable with a securing profile 149, through which screws 44 are inserted into the oval nuts 46. Both clamping systems 42 and 142 make it possible to very effectively rigidly clamp the solar panels, in order to prevent these breaking or loosening.

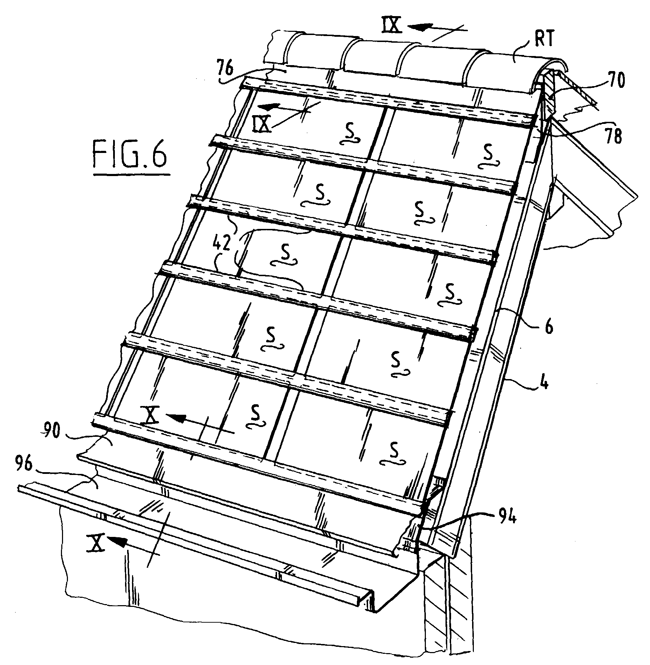

As shown in figures 5 and 6, a roof according to the present invention can be constructed consisting entirely of a surface of solar panels as shown in figure 6 or of a number of solar panels surrounded by roofing tiles as shown in figure 5.

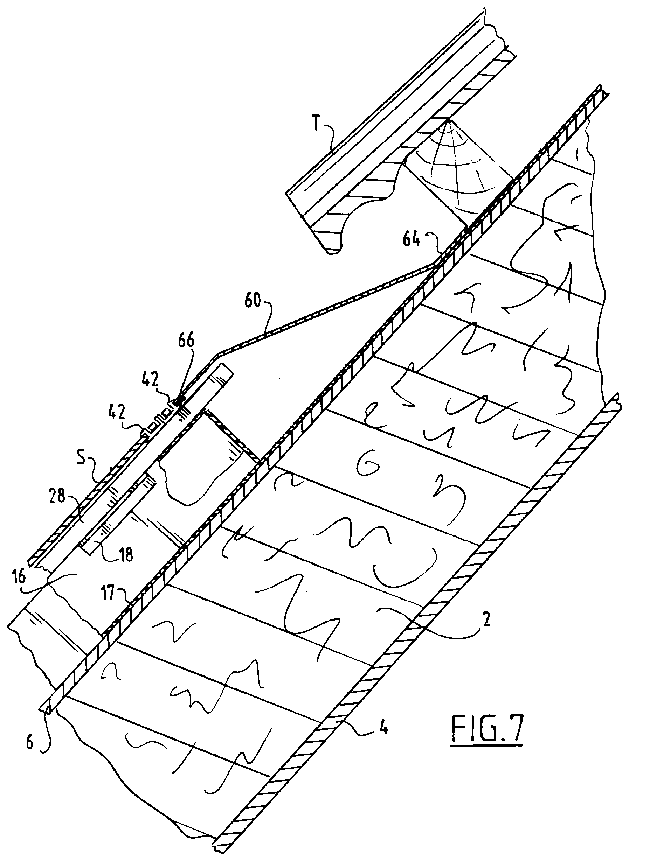

A top tile T is secured at a top edge thereof under a ridge tile RT to a horizontally running tile beam 15, not shown, and at a lower edge thereof is supported above the roof system 1 by means of an aluminium covering plate 60 (figure 7). Flat wing sections 64 extend over the water proof layer 17 in order to provide extra stability, whereby a lower terminal end 66 of the covering plate 60 is secured by means of the upper clamp 42 arranged adjacent the lower clamp 42 which in turn clamps a solar panel, whereby both said clamps 42 are arranged on the support profile 28. Any precipitation falling onto the tile T flows there off and onto the aluminium cover plate 60 to run away off the roof and over the solar panels S.

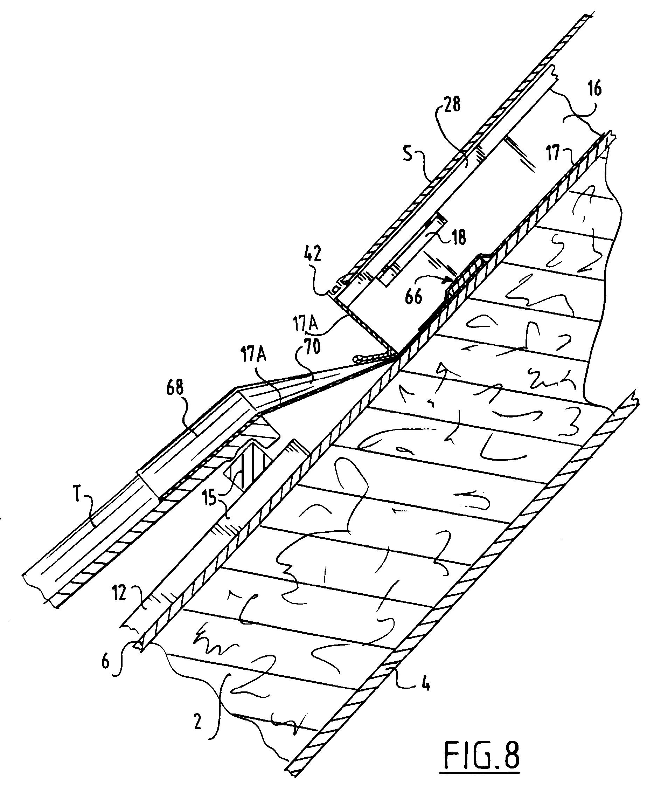

A lower tile T (figure 8) supported on a horizontally running tile beam 15 which is in turn supported on the vertically running lath 12, is overlapped at an upper edge thereof by a lead covering plate 68 associated with a layer of water proof EPDM 17A at the underside thereof.

This layer of EPDM water proof material 17A extends along the upper side of the roofing system 1 and is joined to the waterproof EPDM layer 17 extending over the upper side 6 of the system 1, by means, amongst others, of a spacer 66.

Water flowing off a solar panel S drops onto an upper, downwardly inclined pointed section 70 of the lead covering 68 to flow down over the tile T and away into the guttering (not shown).

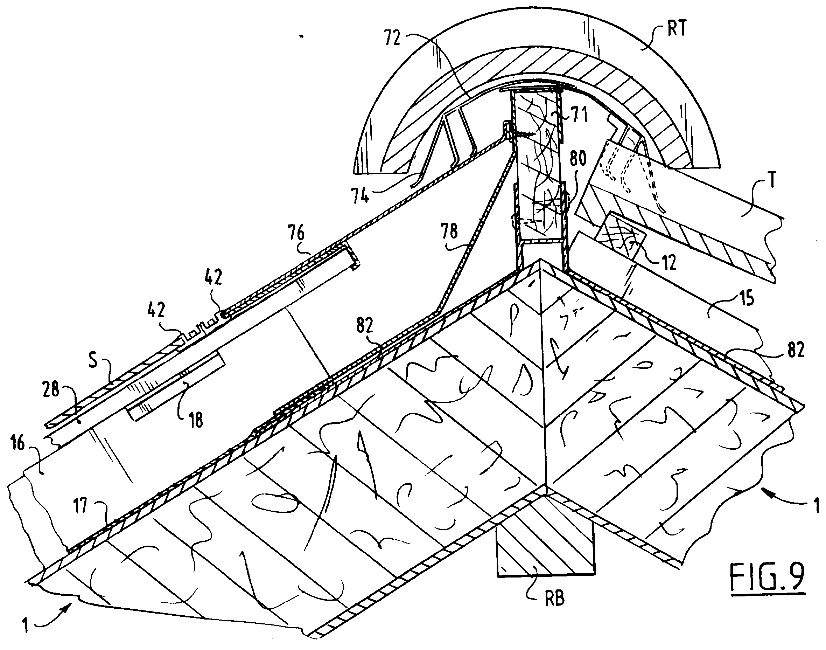

The ridge tile RT is screwed (not shown) into a ridge batten 71 arranged above the junction of two upper roof systems 1 (see figure 9).

A semicircular in cross-section ridge tile wing profile 72 is provided to act as a barrier against birds. This is provided at the outer ends thereof with three support legs 74 which extend down from the main body of the ridge tile support profile 72 to contact on one side an aluminium covering plate 76 which extends from a clamp 42 to be secured by a screw at the other end thereof to the ridge lath 70 and, is secured on the other side of the ridge lath 70 to an upper tile T.

A further aluminium plate 78 follows the upper contour of the ridge lath 70 to extend beneath the upper aluminium plate 76 and follow the upper profile of the roof system 1.

The ridge lath 70 is held in place by means of an extended H profile in cross-section 80, feet 82 of which 82 are secured to the upper side 6 of the roof systems 1.

Water flowing off a roof according to the present invention, flows down over the EPDM layers 17 onto a lower aluminium covering plate 90 which is clamped at an upper end thereof by a clamp 42 adjacent to a similar clamp 42 for clamping the solar panel S.

The aluminium covering plate 90 is secured in place at a lower end thereof by a steel clip 92, which is in turn pinned to a gutter clip 94 and the gutter 96 lined with EPDM layer 98. The gutter clips 94 are secured to the roof by means of being screwed into gutter clip beams 100 arranged on the roof systems 1.

On assembling a roof construction according to the present invention, the system 1 (figure 1) is firstly assembled by means of gluing an aluminium foil layer (not shown) to the expanded polystyrene core 2 whereafter the upper and lower boards 6, respectively 4 side and end beams 10 respectively 8 are glued to the expanded polystyrene core 2.

Subsequently a hole is milled through the lower side 4 and into the expanded polystyrene core for the internal electrical connection box as shown in figure 4. This internal electrical connection box 48 is glued into the layer 2 whereafter the cover 49 for the electrical connection box 48 is screwed onto the lower side 4 of the system 1.

The wooden laths 12, 14 and 16 are then mounted, by means of gluing and/or nailing onto the upper side 6 of the system, whereafter the waterproof EPDM layer 17 is glued thereover, followed by attachment of the tube system 52 for the cabling 50.

Subsequently, bearing members 18 are screwed onto the laths 16 whereafter the solar panel support profiles 28 are attached thereto.

The necessary cabling is then guided through the roof element into the connection box.

The 1.15 mm EPDM foil provides a watertight underlayer beneath the solar panel. Due to the absence of horizontal laths, the water flowing underneath the solar panels has a free passage to the gutters below the roof.

The lower side 4 of the system 1 is preferably a board covering having a smooth white surface, which can serve directly as interior finishing for the attic of a house for example.

Assembly of the roof system up to this point is carried out at a prefabrication site.

The prefabricated roof systems are then transported to the building site and mounted onto a house. Solar panels can then easily be fixed onto the root element, whereby a lock system is used for the electric interconnection of the solar panels. No further electrical work is required on the roof. Inside the building, the further interconnection with the electric grid can be carried out.

The solar panels are fixed in place at the building site. On top of profiles 28 two clamps 42 are then mounted in the profile by the bolt and nut system, then prefab mounted cable strings are plugged in the connection boxes on the back of the solar panels and the panels are then fixed by two more clamps 42 in a landscape or portrait orientation. The gap between the panels is flexible and adaptable to the size thereof, to the size of the roof and to architectural wishes by moving the clips over the profiles. This work can be done by roof construction workers and therefore there is no need for electricians to work on the roof. The clamps 42, 142 have been developed to carry frameless solar panels, which saves material and gives better aesthetical qualities.

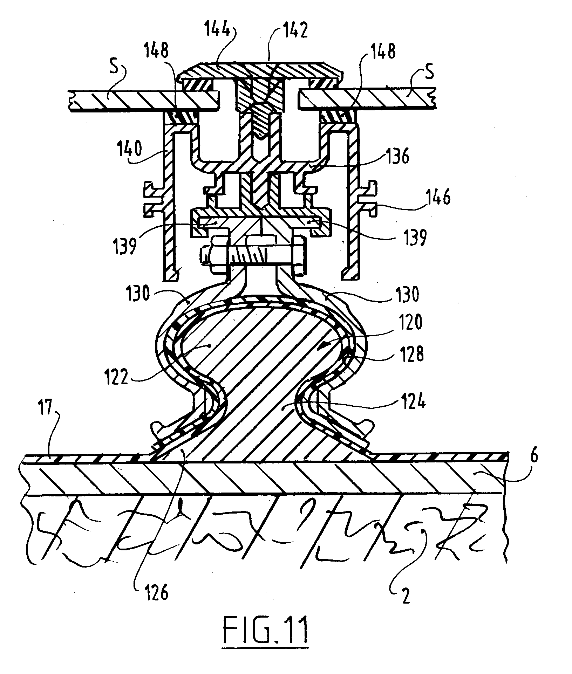

In a further embodiment (figure 11) shaped laths 120 having in cross-section a head 122, a neck 124 and shoulders 126 are attached at the shoulders 126 to the upper side 6 of the roof system 1.

A waterproof layer of EPDM 17, 1.15 mm, extends along the upper side 6 of the system 1, up and over the shaped laths 120.

A further layer of EPDM 128 is provided on the first EPDM layer 17 to further cover the shoulders, neck and head of the shaped laths 120.

Over the waterproof layer 128, 80 mm long extruded clamps 130 having a body profile which corresponds with the shoulders, neck and head of the laths 120 are arranged around said laths 120 and are joined together by means of a stainless steel screw and lock nut combination 132 extending between two upstanding portions of the clamps 130 before these terminate in elongated truncated sections 139 thereof. These clamps 130 are slid over the shaped laths 120 whereby the waterproof layers do not have to be pierced in order to attach said clamps thereto.

A single extruded joining profile 136 extending below the extremities of the truncated sections 139 further stabilizes these and provides, by means of a central U shaped in cross-section profile, a receiving channel for a solar panel support profile 140. A tap screw 142 fixes a waterproof cap 144 between the solar panels S in order to prevent water from flowing into the solar panel support profile 140.

During assembly, 80 mm pieces of the slide profile 136 are pushed forward over the clamps 130 whereafter the solar panel support profiles 140 are arranged on the slide profiles 139. Cable strings can be attached to the support profile by cable clamps integral therewith 146.

The extruded profiles 136 and 140 form a rail system which allows differential movement of the various roof elements under wind load and thermal expansion/contraction.

The cable strings are led through the roof system preferably at the top ridge of the roof under a polyester cover whereat a hole is drilled through the roof element from the outside of the inside connection box. At this point, the roof element can be transported to the building site.

The solar panels are fixed at the building site on top of glazing tape 148 arranged on the solar support profiles 140 whereafter the prefab mounted cables are plugged into the connection boxes on the back of the solar panels, whereafter the watertight profile 144 is arranged between the solar panels. All this work can be carried out by roof construction workers whereby there is no need for costly and timely electrical work to be carried out on the roof by electric engineers.

The inventions is not limited to the above description; the requested rights are rather determined by the following claims.

## Claims

1. Cover system for arrangement on a surface for example a building, said system for providing cover and supporting elements such as solar panels, solar thermal collectors and roofing tiles, the system comprising:
- a first side suitable as an inner wall or ceiling surface of the building;
- a second side, opposite the first side, said second side having such a form as to be suitable for supporting the further roofing elements thereon, wherein one or more of the systems is/are directly attachable to a building in order to form the roof thereof.

2. System according to claim 1 further comprising one or more bearing members associated with the second side thereof, for bearing the roof elements, in particular solar panels, and/or solar thermal collectors.

3. System according to claims 1 or 2, wherein an electrical connection unit is arranged in association therewith, preferably between the first and second sides thereof.

4. System according to any of the claims 1-3, further comprising clamping means associated with the bearing members for clamping solar panels to the bearing members.

5. System according to any of the claims 2-4, wherein the bearing members comprise one or more laths extending across the second side thereof.

6. System according to claim 5, wherein a water resistent layer is arranged over the second side and the laths of the system, said water resistant layer preferably being EPDM.

7. System according to any of the preceding claims wherein a vapor tight layer is arranged therewith preferably between the first and second sides.

8. System according to any of the claims 2-7, wherein the bearing elements further comprise one or more support profiles for supporting solar panels.

9. System according to claim 8, wherein the support profiles are arranged on the laths on the opposite side of the water resistent layer.

10. System according to claims 8 or 9, further comprising solar panel clamps for clamping the solar panel to the system, which clamps are removably interconnectably with the support profiles.

11. System according to any of the claims 8-10, wherein the support profiles are joined to the laths by means of one or more clip elements which clip elements have such a form as to releasably clip onto the laths.

12. System according to any of the claims 8-10 wherein the support profiles are fastened to the laths, by means of one or more fastening members, which are screwed fast to the laths.

13. System according to any of the claims 5-12, wherein the laths comprise one or more solar panel supporting laths, and one or more roof tile supporting laths.

14. System according to claim 13, wherein the solar panel supporting laths and the roof tile supporting laths are arranged substantially parallel next to eachother, and wherein the solar panel supporting laths are taller than the roof tile supporting laths.

15. System according to any of the preceding claims, further comprising cable guiding means for guiding electrical cable from a solar panel to the electrical connection unit arranged between the two sides thereof.

16. System according to claim 15, wherein the cable guiding means are waterproof.

17. Assembly comprising a system according to any of the preceding claims and one or more solar panels, which solar panels are preferably frameless and/or one or more solar thermal collectors.

18. System and/or assembly according to any of the preceding claims 1-17, said system/assembly being prefabricated.

19. Building comprising the system according to claim 18.

20. Building according to claim 19, wherein the system or the assembly is arranged thereon, so that the laths are higher at one end thereof with respect to an other end thereof so that precipitation falling on the roof runs between the laths, underneath the solar panels and over the water insulating layer down the roof and into a gutter system.

21. Method for providing a roof on a building, incorporating solar panels and/or solar thermal collectors, comprising the steps of prefabricating a system according to any of the claims 1-16 at a prefabrication site, transporting said system to a building from the prefabrication site, for which building one or more of the prefabricated systems is suitable as a roof, arranging one or more of the systems on the building to provide the building with a roof, and subsequently joining one or more solar panels and/or solar thermal collectors to the system pre-arranged on the roof.

22. Method according to claim 21 further comprising the step of plugging the solar panel cables into the electrical connection units of the roof system.

23. Use of a system according to claims 1-16 or an assembly according to claim 17 as a roof of a building.

24. Support profile set for supporting elements and devices such as solar panels, solar thermal collectors and roofing tiles on a predetermined surface, such as a building or a facade, said support profile set being mountable on roof bearing laths, the support set comprising a substantially square in cross-section receiving female contour which corresponds with a substantially square in cross-section male support projection, for example a roof lath, and at least one supporting surface associated with the female contour, on which supporting surface a solar panel is supportable and securable.

25. Support profile set according to claim 24 wherein the supporting surface comprises a first support face and a second support face, which first and second support faces are separated by a spacing.

26. Support profile set according to claim 25, wherein sidewalls depend from the support faces, which sidewalls are linked by means of a joining wall arranged opposite the spacing, which support faces and walls define a channel.

27. Support profile set according to claim 26 wherein at least one extended slot is longitudinally arranged in the joining wall.

28. Support profile set according to claims 26 and 27 wherein the channel is arranged on a first side of the female receiving contour and a second side of the female receiving contour, wherein the channels are substantially parallel arranged.

29. Support profile set according to any of the claims 24-28 further comprising a securing profile part, coupleable with the receiving female contour, which securing profile part in turn comprises a substantially square in cross-section coupling profile which acts as a male coupling part to couple onto the female receiving contour and also acts as a female receiving profile itself to couple with an underlying support structure such as a roof bearing lath, wherein the coupling part is provided with at least one wing part extending laterally therefrom, which wing part is substantially V-shaped in cross-section.

30. Support profile set according to any of the claims 24-29, further comprising a holding element for holding a device such as a solar panel or a solar thermal collector in place on the profile set, which holding part is arrangeable to extend across both channels, and comprising gripping means for gripping a solar panel, and securing means for securing the holding part within the channels.
